# FASCICULE DE BREVET EUROPEEN

(11) **EP 0 591 014 B1**
(45) Date de publication et mention de la délivrance du brevet: **13.08.1997**
(21) Numéro de dépôt: 93402119.7
(22) Date de dépôt: 30.08.1993
(51) Int. Cl.: H01M 6/18, C08G 65/32, C08L 71/02, C08L 63/00

(54) **Electrolyte solide polymère conducteur protonique**
Protonleitender, polymerischer fester Elektrolyt
Proton-conducting solid polymeric electrolyte

(30) Priorité: 01.09.1992 FR 9210442
(43) Date de publication de la demande: 06.04.1994
(73) Titulaire: ALCATEL ALSTHOM COMPAGNIE GENERALE D'ELECTRICITE, 75008 Paris (FR)
(72) Inventeur: Andrieu, Xavier, F-91220 Bretigny sur Orge (FR); Kerreneur, Laurence, F-91460 Marcoussis (FR)
(74) Mandataire: Fournier, Michel

(56) Documents cités:
- EP-A- 0 424 827
- FR-A- 2 593 328
- US-A- 3 376 245
- POLYMER COMMUNICATIONS vol. 28 , Février 1987 pages 34 - 35 CHIANG C.K. ET AL 'Synthesis of ionic conducting interpenetrating polymer networks'
- SOLID STATE IONICS vol. 28-30 , 1988 pages 969 - 974 DONOSO ET AL 'NMR ,conductivity and neutron scattering investigation of ionic dynamics in the anhydrous polymer protonic conductor PEO(H3P04)'

## Description

La présente invention concerne un électrolyte solide polymère conducteur protonique, utilisable dans de nombreuses applications, comme par exemple dans les domaines de l'électrochimie ou la microionique.

Comme matériaux conducteurs protoniques, il existe des composés minéraux anhydres (perovskite de lanthane-strontium-aluminium, ou bien KHPO₄,...) ou hydratés (phosphate d'uranyl, par exemple). Les matériaux anhydres présente l'inconvénient de ne fonctionner qu'à température élevée, de l'ordre de 300°C; à température ambiante leur conductivité chute de manière importante. Quant aux matériaux hydratés, leur domaine de stabilité est limité par celui de l'eau de solvatation, et en l'absence d'humidité il n'existe aucune conductivité appréciable. De plus ces matériaux minéraux rigides sont difficiles à mettre en oeuvre, et leurs interfaces (contacts électriques et ioniques) avec des électrodes solides sont de mauvaise qualité.

Les premiers polymères conducteurs protoniques connus sont les polyélectrolytes, polymères sur lesquels des ions ont été greffés, comme par exemples les membranes perfluorosulfonées. Dans ce type de matériaux, la conductivité ionique provient de la phase liquide qui gonfle le polymère. A température ambiante, la conductivité dépasse 10⁻³ S/cm pour une proportion d'eau supérieure à 30%. Mais le coût élevé de ces polyélectrolytes et la difficulté de leur mise en oeuvre pour la réalisation d'électrodes composites limitent leurs applications.

Plus récemment sont apparus des polymères conducteurs protoniques (comme décrit dans les documents EP-A-424 827 et FR-A-2 593 328), constitués d'un polymère peu ou pas réticulé, comportant des hétéroatomes donneurs, et dans lequel est dissous un acide. Les polymères le plus souvent cités sont les polyéthers ou le polyéthylène imine. Le système le plus simple à réaliser à partir de produits commercialement disponibles est l'association polyéthylène oxyde/acide phosphorique.

A température ambiante, la conductivité ionique de ces matériaux anhydres n'est que de l'ordre de 10⁻⁵ S/cm. Afin d'augmenter leur conductivité, il est possible d'introduire de l'eau dans ces électrolytes mais alors leurs propriétés mécaniques se dégradent fortement. Un autre inconvénient majeur de ces polymères est leur solubilité dans l'eau, ce qui rend difficile leur usage en particulier dans les piles à combustibles ou les électrolyseurs.

La présente invention a pour but la réalisation d'un électrolyte solide polymère conducteur protonique possèdant simultanément une conductivité ionique élevée à température ambiante et des bonnes propriétés mécaniques; de plus il doit être insoluble dans l'eau et facile à mettre en oeuvre.

L'objet de la présente invention est un électrolyte solide polymère conducteur protonique comportant un polyéther à deux fonctions amines primaires terminales réticulé par un agent durcisseur à deux fonctions époxy, caractérisé par le fait qu'une solution aqueuse d'acide est incorporée dans ledit polyéther réticulé, dont le taux de réticulation est supérieur à 50%.

Ledit acide est choisi parmi les acides minéraux, tels que H₂SO₄ ou H₃PO₃, les acides organiques et les polyacides comportant les groupements fonctionnels -COOH, comme l'acide polyacrylique ou l'acide polyméthacrylique, les acides organiques et les polyacides comportant les groupements fonctionnels -SO₃H, et leurs mélanges.

La proportion pondérale dudit acide dans l'électrolyte est comprise entre 5% et 50%. Pour une quantité d'acide trop faible, la conductivité est insuffisante. La solubilité de l'acide dans le polymère étant limitée, une proportion trop élevée d'acide conduit à un produit instable, ou bien il devient très difficile de solubiliser l'acide.

Ledit polyéther est basé sur un polymère choisi parmi un polyéthylène oxyde, un polypropylène oxyde, un copolymère statistique des deux précédents, alterné, séquencé, ou greffé de polyéther. Par exemple un polyéther selon l'invention dérivé d'un polyéthylène oxyde aura pour formule générale H₂N-[-O-(CH₂)₂-]ₚ-NH₂, et par exemple un polyéther selon l'invention dérivé d'un polypropylène oxyde aura pour formule générale H₂N-[-O-CHCH₃-CH₂-]_{q}-NH₂.

La masse moléculaire dudit polyéther est comprise entre 300 et 100 000.

Selon un mode de réalisation préférentiel, la proportion dudit agent durcisseur est choisie de façon à ce qu'il y ait de 1 à 4 fonctions époxy par fonction amine, ce qui conduit à un taux de réticulation supérieur à 50%.

De préférence encore, la proportion dudit agent durcisseur est choisie de façon à ce qu'il y ait 2 fonctions époxy par fonction amine, le taux de réticulation est alors proche de 100%. De telles proportions permettent d'obtenir le meilleur compromis entre les propriétés mécaniques et électrochimiques.

Les fonctions amines primaires réagissent avec les fonctions époxy qui s'ouvrent, permettant aux fonctions amines secondaires ainsi formées de réagir à leur tour avec d'autres fonctions époxy. Cet ensemble de réactions assure la formation d'un réseau tridimensionnel, et ainsi la réticulation du polymère.

Par exemple, la succession des réactions peut se représenter de manière simplifiée par:

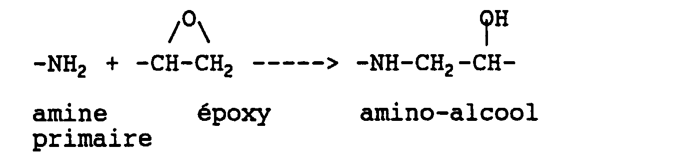

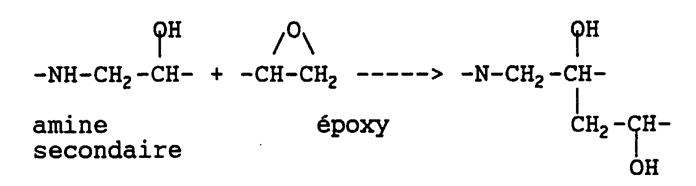

La réticulation du polymère a comme avantage de conférer à l'électrolyte une excellente tenue mécanique due au réseau tridimensionnel formé. En particulier, l'électrolyte obtenu est stable au point de vue dimensionnel: il ne flue pas et, étant gonflé par l'acide, ne gonfle pas au contact d'un solvant lors de son utilisation.

Ledit agent durcisseur est choisi parmi un composé de faible masse moléculaire dérivé d'un diglycidyl, une résine polyépoxyde, et un polyéther comportant deux fonctions époxy. Dans le cas où l'agent durcisseur est un polyéther, celui-ci peut avoir les mêmes caractéristiques que le polymère de base de l'électrolyte.

De préférence, ledit agent durcisseur est choisi parmi les composés comportant deux fonctions époxy terminales.

Selon une première variante, ledit électrolyte est anhydre.

Selon une seconde variante, ledit électrolyte comporte de l'eau dans une proportion pondérale inférieure à 90%, ce qui permet d'accroître la conductivité ionique de l'électrolyte tout en conservant ses propriétés mécaniques.

La présente invention a également pour objet un procédé de réalisation d'un électrolyte solide polymère conducteur protonique comportant un polyéther à deux fonctions amines primaires terminales réticulé par un agent durcisseur à deux fonctions époxy, un acide étant incorporé dans ledit polyéther, procédé selon lequel ledit acide est incoporé dans ledit polyéther par immersion dudit polyéther réticulé dans une solution aqueuse dudit acide.

De préférence, la réticulation dudit polyéther par ledit agent durcisseur est initiée thermiquement. Elle se produit en quelques minutes à une température de l'ordre de 80°C, éventuellement en présence d'un catalyseur accepteur d'électrons.

L'électrolyte obtenu selon la présente invention a encore comme avantages de ne pas être soluble dans l'eau, et d'être de mise en oeuvre aisée. Ceci rend son emploi particulièrement adapté à de nombreuses applications comme les générateurs électrochimiques, les piles à combustibles, les électrolyseurs, les supercondensateurs, les capteurs électrochimiques, les afficheurs et les fenêtres électrochromes, et toutes les applications de la microionique faisant appel aux électrolytes solides.

D'autres caractéristiques et avantages de la présente invention apparaitront à la lecture des exemples suivants de modes de réalisation donnés à titre illustratif mais nullement limitatif.

### EXEMPLE 1

A 25°C, on dissous dans de l'acétonitrile:
- 4g de O,O'-bis-(2-aminopropyl)-polyéthylène glycol 6000 (Jeffamine ED 6000 de Texaco),
- 0,08g de butane diol diglycidyl éther comme agent durcisseur,
- 0,08g de LiClO₄ comme catalyseur.

Après dissolution complète, le mélange est coulé dans un moule, puis le solvant est évaporé sous vide. Le film ainsi obtenu est réticulé par un traitement de 15 heures à 100°C.

Le film réticulé est alors gonflé par une solution aqueuse d'acide phosphorique, puis séché sous vide pour éliminer l'eau pendant 15 heures à 100°C. L'électrolyte solide polymère anhydre obtenu contient 30% en poids d'acide phosphorique.

La conductivité ionique de cet électrolyte, mesurée entre deux électrodes de nickel par la méthode des impédances complexes, est de 2.10⁻⁴ S/cm à 25°C. Cette valeur est très supérieure à celle obtenue dans l'art antérieur pour des électrolytes anhydres non réticulés qui est de 10⁻⁵ S/cm (Synthetic Metals,45 (1991), 323-333).

### EXEMPLE 2

L'exemple 1 est reproduit mais en remplaçant l'acide phosphorique par l'acide sulfurique. On obtient un électrolyte polymère solide qui contient 20% en poids d'acide sulfurique.

C'est un électrolyte de bonne tenue mécanique, et dont la conductivité à 25°C est de 1,4.10⁻³ S/cm.

### EXEMPLE 3

Suivant la procédure décrite dans l'exemple 1, on réalise un film de polymère réticulé à partir de:
- 1g de O,O'-bis-(2-aminopropyl)-polyéthylène glycol 6000,
- 0,05g de butane diol diglycidyl éther,
- 0,05g de LiClO₄ comme catalyseur.

Le film réticulé est alors gonflé par une solution aqueuse d'acide sulfurique à 30%. La proportion pondérale de la solution liquide dans l'électrolyte solide polymère est de 80%.

La conductivité ionique, mesurée dans les mêmes conditions que dans l'exemple 1 mais entre deux électrodes d'or, est de 0,2 S/cm.

### EXEMPLE 4

Suivant la procédure décrite dans l'exemple 1, on réalise un film de polymère réticulé à partir de:
- 2g de O,O'-bis-(2-aminopropyl)-polyéthylène glycol 1900 (Jeffamine ED 2001),
- 0,4g de butane diol diglycidyl éther,

Le film réticulé est alors séché pour éliminer le solvant, pendant 15 heures à 100°C sous vide primaire. On obtient un film isolant dont la conductivité mesurée à 25°C est inférieure à 10⁻⁹ S/cm.

Suivant la même procédure, on réalise un film de polymère réticulé à partir de:
- 2g de O,O'-bis-(2-aminopropyl)-polyéthylène glycol 1900 (Jeffamine ED 2001),
- 0,4g de butane diol diglycidyl éther,
- 0,2g d'acide paratoluène sulfonique.

Le film réticulé est alors séché sous vide primaire pendant 15 heures à 100°C. A 25°C, la conductivité mesurée est de 5.10⁻⁶ S/cm.

Bien entendu la présente invention n'est pas limitée aux modes de réalisation décrits, mais elle est suceptible de nombreuses variantes accessibles à l'homme de l'art sans que l'on ne s'écarte de l'esprit de l'invention.

## Revendications

1. Electrolyte solide polymère conducteur protonique comportant un polyéther à deux fonctions amines primaires terminales réticulé par un agent durcisseur à deux fonctions époxy, caractérisé par le fait qu'une solution aqueuse d'acide est incorporée dans ledit polyéther réticulé, dont le taux de réticulation est supérieur à 50 %.

2. Electrolyte selon la revendication 1, caractérisé par le fait que la proportion pondérale dudit acide dans l'électrolyte est comprise entre 5% et 50%.

3. Electrolyte selon l'une des revendications 1 et 2, caractérisé par le fait que ledit acide est choisi parmi les acides minéraux, les acides organiques et les polyacides comportant les groupements fonctionnels -COOH, les acides organiques et les polyacides comportant les groupements fonctionnels -SO₃H, et leurs mélanges.

4. Electrolyte selon l'une des revendications précédentes, caractérisé par le fait que ledit polyéther est basé sur un polymère choisi parmi un polyéthylène oxyde, un polypropylène oxyde, un copolymère statistique des deux précédents, alterné, séquencé, ou greffé de polyéther.

5. Electrolyte selon l'une des revendications précédentes, caractérisé par le fait que la masse moléculaire dudit polyéther est comprise entre 300 et 100 000.

6. Electrolyte selon l'une des revendications précédentes, caractérisé par le fait que la proportion dudit agent durcisseur est choisie de façon à ce qu'il y ait de 1 à 4 fonctions époxy par fonction amine.

7. Electrolyte selon la revendication 6, caractérisé par le fait que la proportion dudit agent durcisseur est choisie de façon à ce qu'il y ait 2 fonctions époxy par fonction amine.

8. Electrolyte selon l'une des revendications précédentes, caractérisé par le fait que ledit agent durcisseur est choisi parmi un composé de faible masse moléculaire dérivé d'un diglycidyl, une résine polyépoxyde, et un polyéther comportant deux fonctions époxy.

9. Electrolyte selon la revendication 8, caractérisé par le fait que ledit agent durcisseur est choisi parmi les composés comportant deux fonctions époxy terminales.

10. Electrolyte selon l'une des revendications précédentes, caractérisé par le fait que ledit électrolyte est anhydre.

11. Electrolyte selon l'une des revendications 1 à 9, caractérisé par le fait que ledit électrolyte comporte de l'eau dans une proportion inférieure à 90% de sa masse totale.

12. Procédé de réalisation d'un électrolyte selon l'une des revendications précédentes, caractérisé par le fait que ledit acide est incoporé dans ledit polyéther réticulé par immersion dudit polyéther réticulé dans une solution aqueuse dudit acide.

13. Procédé de réalisation d'un électrolyte selon l'une des revendications précédentes, caractérisé par le fait que la réticulation dudit polyéther par ledit agent durcisseur est initiée thermiquement.

## Patentansprüche

1. Protonenleitender Feststoffelektrolyt auf Polymerbasis, mit einem Polyäther, der zwei primäre Amin-Endfunktionen besitzt und durch einen Härter mit zwei Epoxyfunktionen vernetzt ist, dadurch gekennzeichnet, daß eine wässrige Säurelösung in den vernetzen Polyäther inkorporiert ist, dessen Vernetzungsgrad über 50% liegt.

2. Elektrolyt nach Anspruch 1, dadurch gekennzeichnet, daß der Gewichtsanteil der Säure in dem Elektrolyten zwischen 5% und 50% liegt.

3. Elektrolyt nach einem der Ansprüche 1 und 2, dadurch gekennzeichnet, daß die Säure unter den anorganischen Säuren, den organischen Säuren und den Polysäuren, die funktionale -COOH-Gruppen enthalten, und unter den organischen Säuren und den Polysäuren, die funktionale Gruppen -SO₃H enthalten, sowie unter deren Mischungen ausgewählt ist.

4. Elektrolyt nach einem der vorhergehenden Ansprüche, dadurch gekennzeichnet, daß der Polyäther auf einem Polymer beruht, das unter Polyäthylenoxid, Polypropylenoxid, einem statistischen Copolymer dieser beiden Stoffe abwechselnd oder in Folge oder auf den Polyäther aufgepfropft ausgewählt ist.

5. Elektrolyt nach einem der vorhergehenden Ansprüche, dadurch gekennzeichnet, daß die molekulare Masse des Polyäthers zwischen 300 und 100.000 liegt.

6. Elektrolyt nach einem der vorhergehenden Ansprüche, dadurch gekennzeichnet, daß der Anteil an Härter so gewählt wird, daß 1 bis 4 Epoxyfunktionen je Aminfunktion vorhanden sind.

7. Elektrolyt nach Anspruch 6, dadurch gekennzeichnet, daß der Anteil des Härters so gewählt ist, daß zwei Epoxyfunktionen je Aminfunktion vorhanden sind.

8. Elektrolyt nach einem der vorhergehenden Ansprüche, dadurch gekennzeichnet, daß der Härter unter einer Verbindung geringer Molekularmasse, die von einem Diglycidyl abgeleitet ist, unter einem Polyepoxydharz und einem Polyäther ausgewählt wird, der zwei Epoxyfunktionen besitzt.

9. Elektrolyt nach Anspruch 8, dadurch gekennzeichnet, daß der Härter unter den Verbindungen mit zwei Epoxyendfunktionen ausgewählt wird.

10. Elektrolyt nach einem der vorhergehenden Ansprüche, dadurch gekennzeichnet, daß der Elektrolyt wasserfrei ist.

11. Elektrolyt nach einem der Ansprüche 1 bis 9, dadurch gekennzeichnet, daß der Elektrolyt Wasser in einem Anteil unter 90% der Gesamtmasse enthält.

12. Verfahren zur Herstellung eines Elektrolyten nach einem der vorhergehenden Ansprüche, dadurch gekennzeichnet, daß die Säure in den vernetzten Polyäther durch Eintauchen des vernetzten Polyäthers in eine wässrige Lösung der Säure inkorporiert wird.

13. Verfahren zur Herstellung eines Elektrolyten nach einem der vorhergehenden Ansprüche, dadurch gekennzeichnet, daß die Vernetzung des Polyäthers durch den Härter thermisch ausgelöst wird.

## Claims

1. A proton-conducting polymer solid electrolyte comprising a polyether which has two terminal primary amine functions and which is cross-linked by a curing agent having two epoxy functions, said electrolyte being characterized by the fact that an aqueous solution of acid is incorporated into said cross-linked polyether, with crosslinking being greater than 50%.

2. An electrolyte according to claim 1, characterized by the fact that the percentage by weight of said acid in the electrolyte lies in the range 5% to 50%.

3. An electrolyte according to claim 1 or 2, characterized by the fact that said acid is selected from inorganic acids, organic acids, and polyacids that contain -COOH functional groups, organic acids and polyacids that contain -SO₃H functional groups, and mixtures thereof.

4. An electrolyte according to any preceding claim, characterized by the fact that said polyether is based on a polymer selected from a polyethylene oxide, a polypropylene oxide, and a statistical copolymer thereof, alternated, block sequenced, or polyether grafted.

5. An electrolyte according to any preceding claim, characterized by the fact that the molecular mass of said polyether lies in the range 300 to 100,000.

6. An electrolyte according to any preceding claim, characterized by the fact that the proportion of said curing agent is selected so that there are 1 to 4 epoxy functions per amine function.

7. An electrolyte according to claim 6, characterized by the fact that the proportion of said curing agent is selected so that there are 2 epoxy functions per amine function.

8. An electrolyte according to any preceding claim, characterized by the fact that said curing agent is selected from a compound having low molecular mass and derived from diglycidyl, a polyepoxy resin, and a polyether including two epoxy functions.

9. An electrolyte according to claim 8, characterized by the fact that said curing agent is selected from compounds that each include two terminal epoxy functions.

10. An electrolyte according to any preceding claim, characterized by the fact that said electrolyte is anhydrous.

11. An electrolyte according to any one of claims 1 to 9, characterized by the fact that said electrolyte includes water in a proportion that is less than 90% of the total mass of the electrolyte.

12. A method of making an electrolyte according to any preceding claim, characterized by the fact that said acid is incorporated into said cross-linked polyether by immersing said cross-linked polyether in an aqueous solution of said acid.

13. A method of making an electrolyte according to any preceding claim, said method being characterized by the fact that the crosslinking of said polyether by said curing agent is initiated thermally.
